# EUROPÄISCHE PATENTANMELDUNG

(11) **EP 3 798 669 A1**
(43) Veröffentlichungstag der Anmeldung: **31.03.2021**
(21) Anmeldenummer: 19200057.8
(22) Anmeldetag: 27.09.2019
(51) Int. Cl.: G01S 7/481, G01S 7/497, G01S 17/10, G01S 17/42, G02B 7/00, G02B 27/62, G01S 17/08

(54) **OPTISCHER SENSOR**

(71) Anmelder: Leuze electronic GmbH + Co. KG, 73277 Owen/Teck (DE)
(72) Erfinder: Wendel, Simon, 73230 Kirchheim unter Teck (DE); Eisenmenger, Johann, 73207 Plochingen (DE); Kärner, Alexander, 73207 Plochingen (DE)
(74) Vertreter: Ruckh, Rainer Gerhard

(57) **Zusammenfassung**

Die Erfindung betrifft einen optischen Sensor (1) mit einem Sendelichtstrahlen (4) emittierenden Sender (5), einem Empfangslichtstrahlen (6) empfangenden Empfänger (7) und einer Auswerteeinheit (9), in welcher in Abhängigkeit von Empfangssignalen Ausgangssignale generiert werden. Der Sender (5) ist in einer Führung (11) gelagert. Wenigstens ein Teil der Außenfläche der Führung (11) bildet eine kugelförmige Führungsfläche (13) aus, mit der der die Führung (11) in einer im optischen Sensor (1) stationär gelagerten Halterung (14) drehbar gelagert ist. Die Halterung (14) weist Fixiermittel auf, mittels derer die Führung (11) in einer Drehstellung fixierbar ist.

## Beschreibung

Die Erfindung betrifft einen optischen Sensor.

Derartige optische Sensoren weisen generell einen Sendelichtstrahlen emittierenden Sender, einen Empfangslichtstrahlen empfangenden Empfänger und eine Auswerteeinheit zur Auswertung von Empfangssignalen auf.

Die optischen Sensoren können für eine Überwachung von Objekten in einem Überwachungsbereich eingesetzt werden. Auch können die optischen Sensoren als Barcodelesegeräte zum Lesen von Barcodes ausgebildet sein oder für eine Entfernungsmessung verwendet werden.

Um eine fehlerfreie Objektdetektion zu gewährleisten, wird in einem Justagevorgang der Sender so justiert, dass dessen Sendelichtstrahlen nach einer Objektdetektion auf den Empfänger geführt sind. Hierzu wird der Sender mit einer Taumel-Einrichtung oder dergleichen in seiner Position relativ zum Empfänger eingestellt. Diese umfasst typischerweise zwei Hebel, wobei jeweils mittels eines Hebels eine Verstellung, insbesondere Verkippung des Senders in einer Raumrichtung möglich ist.

Diese Justage muss manuell durchgeführt werden und ist relativ umständlich und zeitaufwändig. Weiter ist nachteilig, dass die Verstellungen mit den Hebeln nacheinander und bezüglich unterschiedlicher Drehachsen durchgeführt werden müssen, was eine genaue Ausrichtung des Senders erschwert.

Der Erfindung liegt die Aufgabe zugrunde, für einen optischen Sensor der eingangs genannten Art eine genaue und einfache Justage zu ermöglichen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen optischen Sensor mit einem Sendelichtstrahlen emittierenden Sender, einem Empfangslichtstrahlen empfangenden Empfänger und einer Auswerteeinheit, in welcher in Abhängigkeit von Empfangssignalen Ausgangssignale generiert werden. Der Sender ist in einer Führung gelagert. Wenigstens ein Teil der Außenfläche der Führung bildet eine kugelförmige Führungsfläche aus, mit der die Führung in einer im optischen Sensor stationär gelagerten Halterung drehbar gelagert ist. Die Halterung weist Fixiermittel auf, mittels derer die Führung in einer Drehstellung fixierbar ist.

Bei dem erfindungsgemäßen optischen Sensor wird mit geringem konstruktiven Aufwand eine exakte Ausrichtung des Senders und damit der Strahlachse der vom Sender emittierten Sendelichtstrahlen relativ vom Empfänger ermöglicht.

Durch diese Justage kann der Sender, insbesondere auch abhängig von der jeweiligen Applikation, genau justiert werden, sodass in dem auf die Justage folgenden Arbeitsbetrieb eine fehlerfreie Objektdetektion mit dem optischen Sensor durchgeführt werden kann.

Ein wesentlicher Aspekt der Erfindung besteht darin, dass durch die kugelförmige Ausbildung der Führungsfläche die Führung in zwei Drehrichtungen stufenlos verstellt werden kann, sodass in nur einem Justagevorgang die Führung mit dem Sender in zwei Raumrichtungen verstellt werden kann. Durch die stufenlose Verstellmöglichkeit kann die Justage sehr genau durchgeführt werden. Dabei ist es nicht erforderlich, dass die Führungsfläche die Außenkontur einer kompletten Kugel aufweist. Vielmehr schließt der Begriff kugelförmige Führungsfläche insbesondere den Fall ein, dass die Führungsfläche nur ein kugelförmiges Teilsegment einer Kugeloberfläche umfasst. Dies ist ausreichend damit die kugelförmige Führungsfläche eine Taumelbewegung in zwei Drehrichtungen relativ zur Halterung durchführen kann. Die so ausgebildete Justagevorrichtung bildet einen Kugel-Kollimator mit dem eine hochgenaue Justage und Vorgabe der Strahlrichtung der Sendelichtstrahlen in zwei Raumrichtungen ermöglicht wird.

Dabei ist es lediglich erforderlich, dass während des Justagevorgangs die Führungsfläche relativ zur Halterung beweglich ausgebildet ist, wobei die Halterung eine flächige oder nur punktuelle Anlagefläche für die Führungsfläche ausbilden kann.

Nach erfolgter Justage erfolgt die Fixierung der Justageposition der Führung dadurch, dass Fixiermittel betätigt werden, die bevorzugt Bestandteil der Halterung sind. Durch Betätigung der Fixiermittel werden die Anlageflächen der Halterung gegen die Führungsfläche gepresst, wodurch die Führung in ihrer Justageposition fixiert ist. Generell können die Fixiermittel auch von Klebemitteln gebildet sein.

Gemäß einer geometrisch vorteilhaften Konfiguration verläuft die Strahlachse der Sendelichtstrahlen in Richtung der in Längsrichtung der Führung verlaufenden Symmetrieachse, wobei auf der Symmetrieachse das Zentrum der kugelförmigen Führungsfläche liegt.

Weiter vorteilhaft ist dem Sender eine in der Führung gelagerte Sendeoptik zugeordnet.

Die Führung bildet damit eine kompakte Baueinheit, in welcher alle sendeseitigen optoelektronischen Komponenten integriert sind. Dabei besteht ein weiterer Vorteil darin, dass die Sendeoptik relativ zum Sender in einer festen Position in der Führung angeordnet ist. Eine Ausrichtung des Senders relativ zur Sendeoptik ist damit nicht erforderlich. Vielmehr kann allein durch die Verstellung der Führung als Gesamteinheit durch Führen der Führungsfläche relativ zur Halterung die gesamte Justage bewerkstelligt werden.

Gemäß einer zweckmäßigen Ausgestaltung ist an der Außenseite der Führung ein Haltemittel angeordnet, welches ein Betätigungsmittel zur Verstellung der Drehposition der Führung ausbildet.

Im einfachsten Fall greift eine Bedienperson das Haltemittel, das in Form eines Stegs oder dergleichen ausgebildet sein kann, und führt damit die Justage des Senders derart durch, dass die Führungsfläche relativ zur Halterung geschwenkt wird. Hierbei ist besonders vorteilhaft, dass mit dem Haltemittel nur ein einziges Betätigungsmittel zur Justage des Senders erforderlich ist.

Gemäß einer besonders vorteilhaften Ausführungsform der Erfindung, bildet das Haltemittel eine Schnittstelle zum Anschluss an einen Roboter aus.

Damit wird eine vollständig automatisierte Durchführung der Justage ermöglicht. Insbesondere kann über eine geeignete Software im Roboter die Ausrichtgüte der Justage des Senders überwacht werden.

Das Funktionsprinzip der Justage des optischen Sensors ist vorzugsweise derart, dass nur der Sender in der Führung beweglich gelagert ist, während der Empfänger stationär im optischen Sensor angeordnet ist. Vorteilhaft sind die Komponenten des optischen Sensors in einem Gehäuse gelagert. Der Empfänger ist dann ortsfest im Gehäuse untergebracht. Demgegenüber ist die Führung mit dem Sender beweglich im Gehäuse gelagert. Hierzu ist die Halterung ortsfest im Gehäuse angeordnet, wobei die Führung in der Halterung verstellbar gelagert ist.

Ein Vorteil/Ziel der erfindungsgemäßen Anordnung ist es, dass durch das gezielte Taumeln und damit das Einstellen der Abstrahlrichtung des Senders auch die Lichteinfallsrichtung auf die Empfangsoptik nach Reflexion an einem Target eingestellt werden kann. Dies gilt in besonderem Maße, wenn das Target ein Retroreflektor ist. Damit kann die Justage so erfolgen, dass das auf die Empfangsoptik einfallende Licht gerade auf den Empfänger fällt und eine Empfängerjustage entfällt.

Vorteilhaft ist der Sender in der Führung über ein flexibles Anschlussmittel an stationär angeordnete Elektronikkomponenten elektronisch verbunden.

Damit wird auf einfache Weise ein elektrischer Anschluss des beweglich gelagerten Senders an ortsfest im Gehäuse gelagerten Einheiten wie Leiterplatten oder Spannungsversorgungen hergestellt.

Gemäß einer vorteilhaften Ausgestaltung sind in der Führung Auskopplungsmittel vorgesehen, mittels derer ein Teil der Sendelichtstrahlen als Referenzlichtstrahlen ausgekoppelt sind. Die Referenzlichtstrahlen sind auf einen stationär angeordneten Referenzlichtempfänger geführt.

Durch das auf den Referenzlichtempfänger ausgekoppelte Referenzlicht kann die Funktion des Senders kontrolliert werden. Insbesondere kann damit die Sendeleistung des Senders kontrolliert werden. Dies ist insbesondere dann von Bedeutung, wenn der Sender Sendelicht in Form von Laserstrahlung emittiert. Insbesondere dann ist eine Überwachung der maximal abgestrahlten Lichtleistung erforderlich, um die Anforderungen des optischen Sensors hinsichtlich der Augensicherheit zu erfüllen. Für den Fall, dass der Sensor ein nach dem Phasenmessprinzip arbeitender Distanzsensor ist, kann der Referenzlichtempfänger als Referenz für die Distanzmessungen verwendet werden.

Besonders vorteilhaft ist das Auskopplungsmittel ein lichtreflektierendes Optikelement.

Mit diesem Optikelement ist eine besonders einfache Auskopplung von Referenzlicht möglich. Das Optikelement kann dabei eine ebene oder gekrümmte Fläche aufweisen. Im letzteren Fall bildet das Optikelement ein strahlformendes Element. In jedem Fall ist das Optikelement so im Bereich der Halterung angeordnet und so dimensioniert, dass nach erfolgter Justage eine für eine Funktionskontrolle hinreichende und definierte Lichtmenge auf den Referenzlichtempfänger geführt wird.

Eine konstruktiv besonders vorteilhafte Ausführungsform sieht vor, das Optikelement in die Haltemittel zu integrieren.

Gemäß einer ersten Variante der Erfindung ist der optische Sensor zur Erfassung von Objekten in einem Überwachungsbereich ausgebildet.

In diesem Fall wird in der Auswerteeinheit ein Objektfeststellungssignal generiert, welches signalisiert, ob ein Objekt im Überwachungsbereich vorhanden ist oder nicht.

Gemäß einer vorteilhaften Ausführungsform ist der Überwachungsbereich von einem Reflektor begrenzt.

Bei freiem Überwachungsbereich werden dann vom Sender emittierte Sendelichtstrahlen zum Reflektor geführt und von dort als Empfangslichtstrahlen zurück zum Empfänger geführt. In diesem Fall erfolgt die erfindungsgemäße Justage vorteilhaft derart, dass bei freiem Überwachungsbereich eine definierte oder möglichst hohe Lichtmenge vom Reflektor auf den Empfänger geführt sind.

Der optische Sensor kann dabei generell nach dem Lichttasterprinzip oder dem Reflexionslichtschrankenprinzip arbeiten. Insbesondere kann der optische Sensor auch als Distanzsensor ausgebildet sein. Die Distanzmessungen erfolgen zum Beispiel nach einem Impuls-Laufzeit-Verfahren oder einem Phasenmessverfahren.

Dabei kann der optische Sensor auch als Flächendistanzsensor, das heißt scannender Distanzsensor ausgebildet sein.

Gemäß einer zweiten Variante der Erfindung ist der optische Sensor als Barcodelesegerät ausgebildet, das heißt mit dem optischen Sensor werden Barcodes gelesen und dekodiert. Auch in diesem Fall kann der optische Sensor als scannendes System ausgebildet sein.

Die Erfindung wird im Folgenden anhand der Zeichnungen erläutert. Es zeigen:
- Figur 1:: Ausführungsbeispiel des erfindungsgemäßen optischen Sensors.
- Figur 2:: Schnittdarstellung einer Justagevorrichtung für den optischen Sensor gemäß Figur 1.
- Figur 3:: Perspektivische Darstellung der Justagevorrichtung gemäß Figur 2.
- Figur 4:: Anordnung der Justagevorrichtung gemäß den Figuren 2 und 3 relativ zu einem Referenzlichtempfänger.

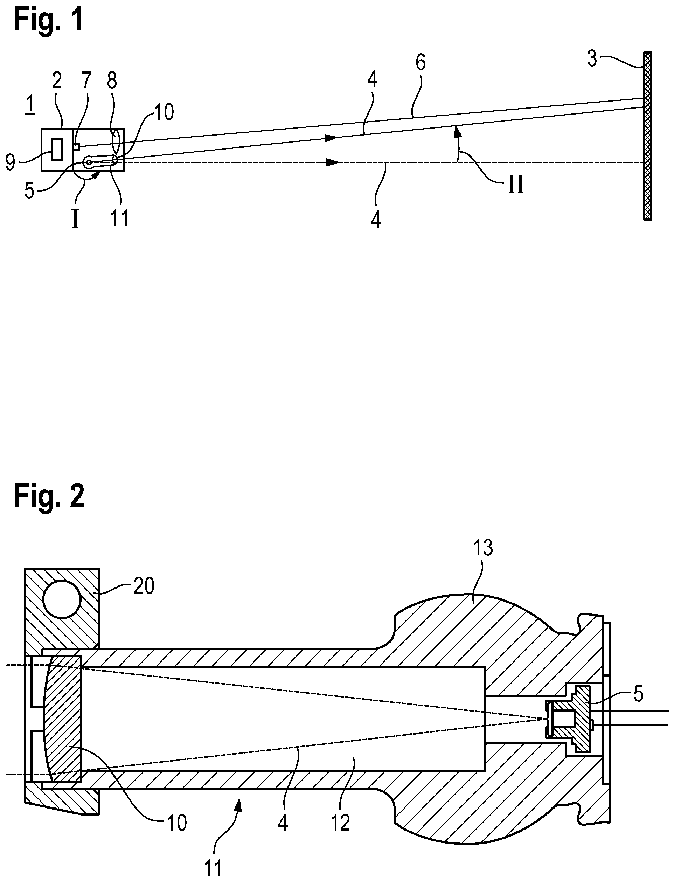

Figur 1 zeigt schematisch ein Ausführungsbeispiel des erfindungsgemäßen optischen Sensors 1, dessen Komponenten in einem Gehäuse 2 integriert sind.

Der optische Sensor 1 dient im vorliegenden Fall zur Erfassung von Objekten in einem Überwachungsbereich. An einem Rand des Überwachungsbereichs ist der optische Sensor 1 angeordnet, am gegenüberliegenden Rand des Überwachungsbereichs befindet sich ein Target, das im vorliegenden Fall von einem Reflektor 3, insbesondere einem Retroreflektor gebildet ist.

Der optische Sensor 1 weist einen Sendelichtstrahlen 4 emittierenden Sender 5 auf, der im vorliegenden Fall von einer Laserdiode gebildet ist. Weiterhin weist der optische Sensor 1 einen Empfangslichtstrahlen 6 empfangenden Empfänger 7 auf, der beispielsweise von einer Photodiode gebildet ist. Dem Empfänger 7 ist eine Empfangsoptik 8 in Form einer Linse vorgeordnet.

Schließlich weist der optische Sensor 1 eine Auswerteeinheit 9 auf, die von einem Mikroprozessor oder dergleichen gebildet ist. Die Auswerteeinheit 9 dient zur Steuerung des Betriebs des Senders 5. Weiterhin wird in der Auswerteeinheit 9 abhängig von den Empfangssignalen des Empfängers 7 ein Objektfeststellungssignal generiert, das über einen nicht dargestellten Ausgang des optischen Sensors 1 ausgegeben wird. Im vorliegenden Fall ist das Objektfeststellungssignal als binäres Schaltsignal ausgebildet.

Der Empfänger 7 und die Empfangsoptik 8 sind wie die Auswerteeinheit 9 stationär, das heißt ortsfest im Gehäuse 2 angeordnet. Demgegenüber sind die Sender 5 und optional eine dem Sender 5 zugeordnete Sendeoptik 10, die in Form einer Linse oder dergleichen gebildet ist, in einer Führung 11 gelagert, die im Gehäuse 2 schwenkbar gelagert ist. Durch Schwenkbewegungen der Führung 11 (gekennzeichnet durch den Pfeil I) kann die Strahlrichtung der Sendelichtstrahlen 4 (gekennzeichnet durch den Pfeil II) verändert werden.

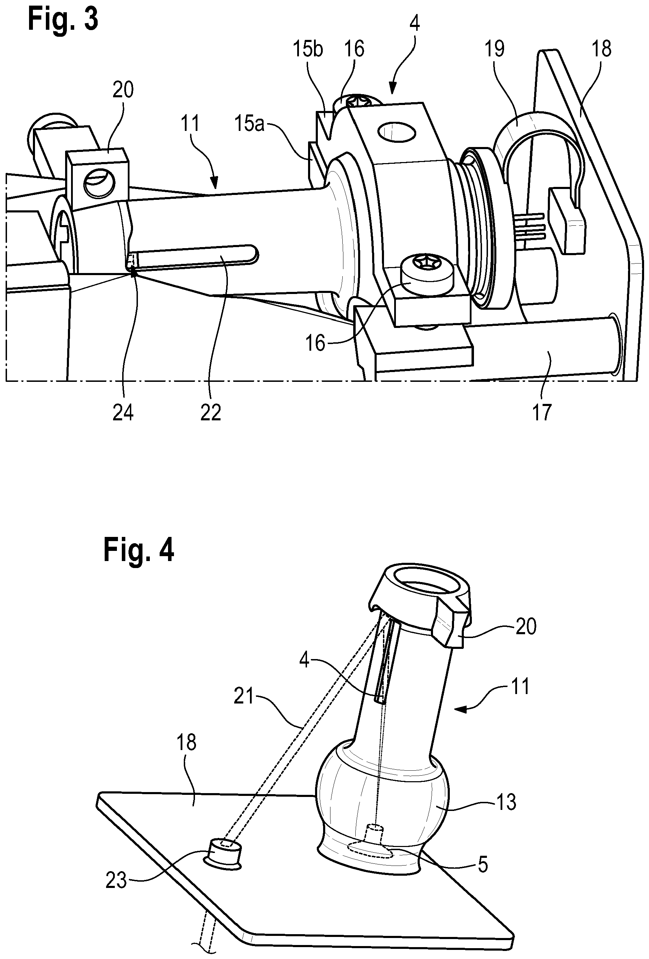

Die Figuren 2 und 3 zeigen in detaillierten Darstellungen die Führung 11, in welcher der Sender 5 und die Sendeoptik 10 gelagert sind.

Wie Figur 2 zeigt, weist die Führung 11 einen sich entlang seiner Längsrichtung erstreckenden Hohlraum 12 auf, der im vorliegenden Fall einen kreisförmigen Querschnitt aufweist und symmetrisch zur Längsachse ausgebildet ist. An seinem hinteren Ende ist der Querschnitt des Hohlraumes 12 verkleinert und bildet eine Aufnahme aus, in der der Sender 5 gelagert ist. Die vom Sender 5 emittierten Sendelichtstrahlen 4 sind in den Hohlraum 12 geführt und treten an seiner Austrittsöffnung aus der Führung 11 aus, wobei im Bereich der Austrittsöffnung die Sendeoptik 10 vorgesehen ist.

Erfindungsgemäß ist ein Abschnitt der äußeren Mantelfläche der Führung 11 als kugelförmige Führungsfläche 13 ausgebildet. Dabei ist die Führungsfläche 13 im Bereich des Senders 5 angeordnet. Die Führungsfläche 13 ist symmetrisch zur Längsachse der Führung 11 ausgebildet.

Diese Führungsfläche 13 ist, wie Figur 3 zeigt, in einer Halterung 14 gelagert. Die Halterung 14 ist im vorliegenden Fall von zwei schellenförmigen Halbschalen 15a, 15b gebildet, die mit Schrauben 16 aneinander befestigt sind.

Die Innenseiten der Halbschalen 15a, 15b sind vorteilhaft an die Kontur der Führungsfläche 13 angepasst.

Die so gebildete Halterung 14 ist mit einer Stützsäule 17 auf einer Leiterplatte 18 gelagert und somit wie die Leiterplatte 18 selbst ortsfest im Gehäuse 2 angeordnet.

Der Sender 5 ist mit elektronischen Komponenten der Leiterplatte 18 über ein flexibles Anschlussmittel, das im vorliegenden Fall von einem flexiblen Flachkabel 19 gebildet ist, elektrisch verbunden.

Zur Justage kann die Führung 11 in zwei Drehrichtungen geschwenkt werden. Zur Durchführung der Justage sind die Schrauben 16 der Halterung 14 etwas gelockert, sodass die Führungsfläche 13 relativ zu den Auflageflächen bildenden Innenseiten der Halbschalen 15a, 15b bewegt werden kann. Dadurch kann die Führung 11 in zwei Drehrichtungen geschwenkt werden.

Als Betätigungsmittel für das Schwenken der Führung 11 ist an deren Außenseite als Haltemittel ein Haltesteg 20 befestigt. Der Haltesteg 20 befindet sich im vorliegenden Fall am vorderen Ende der Führung 11.

Prinzipiell kann eine Bedienperson den Haltesteg 20 greifen und so die Schwenkposition der Führung 11 verstellen. Im vorliegenden Fall bildet der Haltesteg 20 einen Anschluss für einen Roboter aus. Mit dem nicht dargestellten Roboter kann eine automatisierte Justage erfolgen.

Sobald die Justage abgeschlossen ist, werden die Schrauben 16 der Halterung 14 fest angezogen, wodurch die Führung 11 in der Halterung 14 lagefixiert ist.

Nach erfolgter Justage kann der Arbeitsbetrieb des optischen Sensors 1 zur Detektion von Objekten aufgenommen werden.

Wie Figur 4 zeigt, wird von den Sendelichtstrahlen 4 ein Teil als Referenzlichtstrahlen 21 ausgekoppelt und über einen Schlitz 22 in der Wand aus der Führung 11 geleitet und dann auf einen stationär im Gehäuse 2 angeordneten Referenzlichtempfänger 23 geführt, der auf der Leiterplatte 18 angeordnet ist. Die Auskopplung der Referenzlichtstrahlen 21 erfolgt über ein lichtreflektierendes Optikelement 24 im Bereich des Haltestegs 20.

Anhand der auf den Referenzlichtempfänger 23 geführten Referenzlichtstrahlen 21 erfolgt eine Funktionskontrolle des Senders 5, insbesondere eine Überwachung dessen Sendeleistung zur Gewährleistung der Augensicherheit des optischen Sensors 1.

### Bezugszeichenliste

- (1): Optischer Sensor
- (2): Gehäuse
- (3): Reflektor
- (4): Sendelichtstrahlen
- (5): Sender
- (6): Empfangslichtstrahlen
- (7): Empfänger
- (8): Empfangsoptik
- (9): Auswerteeinheit
- (10): Sendeoptik
- (11): Führung
- (12): Hohlraum
- (13): Führungsfläche
- (14): Halterung
- (15a, b): Halbschale
- (16): Schraube
- (17): Stützsäule
- (18): Leiterplatte
- (19): Flachkabel
- (20): Haltesteg
- (21): Referenzlichtstrahlen
- (22): Schlitz
- (23): Referenzlichtempfänger
- (24): Optikelement
- I: Pfeil, Schwenkbewegung
- II: Pfeil, Strahlrichtung

## Patentansprüche

1. Optischer Sensor (1) mit einem Sendelichtstrahlen (4) emittierenden Sender (5), einem Empfangslichtstrahlen (6) empfangenden Empfänger (7) und einer Auswerteeinheit (9), in welcher in Abhängigkeit von Empfangssignalen Ausgangssignale generiert werden, **dadurch gekennzeichnet, dass** der Sender (5) in einer Führung (11) gelagert ist, dass wenigstens ein Teil der Außenfläche der Führung (11) eine kugelförmige Führungsfläche (13) ausbildet, mit der die Führung (11) in einer im optischen Sensor (1) stationär gelagerten Halterung (14) drehbar gelagert ist, und dass die Halterung (14) Fixiermittel aufweist, mittels derer die Führung (11) in einer Drehstellung fixierbar ist.

2. Optischer Sensor (1) nach Anspruch 1, **dadurch gekennzeichnet, dass** die Strahlachse der Sendelichtstrahlen (4) in Richtung einer in Längsrichtung der Führung (11) verlaufenden Symmetrieachse verläuft, wobei auf der Symmetrieachse das Zentrum der kugelförmigen Führungsfläche (13) liegt.

3. Optischer Sensor (1) nach einem der Ansprüche 1 oder 2, **dadurch gekennzeichnet, dass** dem Sender (5) eine in der Führung (11) gelagerte Sendeoptik (10) zugeordnet ist.

4. Optischer Sensor (1) nach einem der Ansprüche 1 - 3, **dadurch gekennzeichnet, dass** an der Außenseite der Führung (11) ein Haltemittel angeordnet ist, welches ein Betätigungsmittel zur Verstellung der Drehposition der Führung (11) ausbildet.

5. Optischer Sensor (1) nach Anspruch 4, **dadurch gekennzeichnet, dass** das Haltemittel eine Schnittstelle zum Anschluss an einen Roboter ausbildet.

6. Optischer Sensor (1) nach einem der Ansprüche 1 - 5, **dadurch gekennzeichnet, dass** der Empfänger (7) stationär angeordnet ist.

7. Optischer Sensor (1) nach einem der Ansprüche 1 - 6, **dadurch gekennzeichnet, dass** der Sender (5) in der Führung (11) über ein flexibles Anschlussmittel an stationär angeordnete Elektronikkomponenten elektronisch verbunden ist.

8. Optischer Sensor (1) nach einem der Ansprüche 1 - 7, **dadurch gekennzeichnet, dass** in der Führung (11) Auskopplungsmittel vorgesehen sind, mittels derer ein Teil der Sendelichtstrahlen (4) als Referenzlichtstrahlen (21) ausgekoppelt sind, wobei die Referenzlichtstrahlen (21) auf einen stationär angeordneten Referenzlichtempfänger (23) geführt sind.

9. Optischer Sensor (1) nach Anspruch 8, **dadurch gekennzeichnet, dass** das Auskopplungsmittel ein lichtreflektierendes Optikelement (24) ist.

10. Optischer Sensor (1) nach einem der Ansprüche 1 - 9, **dadurch gekennzeichnet, dass** dieser zur Erfassung von Objekten in einem Überwachungsbereich ausgebildet ist.

11. Optischer Sensor (1) nach Anspruch 10, **dadurch gekennzeichnet, dass** der Überwachungsbereich von einem Reflektor (3) begrenzt ist.

12. Optischer Sensor (1) nach einem der Ansprüche 1 - 11, **dadurch gekennzeichnet, dass** dieser ein Distanzsensor ist.

13. Optischer Sensor (1) nach einem der Ansprüche 1 - 12, **dadurch gekennzeichnet, dass** dieser ein Flächendistanzsensor ist.

14. Optischer Sensor (1) nach einem der Ansprüche 1 - 9, **dadurch gekennzeichnet, dass** dieser ein Barcodelesegerät ist.

15. Optischer Sensor (1) nach Anspruch 14, **dadurch gekennzeichnet, dass** dieser ein scannendes Barcodelesegerät ist.
